# EUROPEAN PATENT APPLICATION

(11) **EP 2 924 075 A1**
(43) Date of publication of application: **30.09.2015**
(21) Application number: 13856833.2
(22) Date of filing: 18.11.2013
(51) Int. Cl.: C08L 101/00, A01N 25/10, A01N 59/20, A01P 3/00, C08F 290/06, C08K 3/22, C08K 3/24, C08K 3/30

(54) **OPTICAL SEMICONDUCTOR DISPERSED RESIN COMPOSITION, METHOD FOR PRODUCING SAME, AND ANTIBACTERIAL MEMBER**

(30) Priority: 22.11.2012 JP 2012255848
(71) Applicant: Panasonic Intellectual Property Management Co., Ltd., Osaka-shi, Osaka 540-6207 (JP)
(72) Inventor: UEDA, Takeshi, Chuo-ku, Osaka-shi Osaka 540-6207 (JP); KINUGAWA, Kensaku, Chuo-ku, Osaka-shi Osaka 540-6207 (JP); YAMASHINA, Daigo, Chuo-ku, Osaka-shi Osaka 540-6207 (JP)
(74) Representative: Müller-Boré & Partner Patentanwälte PartG mbB
(86) International application number: PCT/JP2013/006741
(87) International publication number: WO 2014/080606

(57) **Abstract**

An optical semiconductor-dispersed resin composition of the present invention includes: an optical semiconductor; 0.1 to 5 parts by mass of a copper compound per 100 parts by mass of the optical semiconductor; 50 to 350 parts by mass of an active energy ray-curable resin per 100 parts by mass of the optical semiconductor; and 0.1 to 20 parts by mass of a photopolymerization initiator per 100 parts by mass of the active energy ray-curable resin. The resin composition is manufactured by performing polymerization of the active energy ray-curable resin and excitation of the optical semiconductor through exposure to active energy rays.

## Description

### TECHNICAL FIELD

The present invention relates to an optical semiconductor-dispersed resin composition, a manufacturing method of the resin composition, and an antibacterial member. To be specific, the present invention relates to an optical semiconductor-dispersed resin composition which is inexpensive and is capable of retaining the antibacterial performance for a long period of time, and relates to the manufacturing method of the optical semiconductor-dispersed resin composition and an antibacterial member employing the optical semiconductor-dispersed resin composition.

### BACKGROUND ART

Increasing desire of consumers for cleanliness is prompting development and commercialization of various types of antibacterial members that can reduce microorganisms in the living environment. The antibacterial members include antibacterial materials, which are roughly classified into organic and inorganic materials.

Materials typically known as the inorganic antibacterial materials include silver, copper, zinc, tin, lead, and compounds thereof. The antibacterial materials containing especially silver, copper, zinc, and compounds thereof among the aforementioned materials are used in various fields for the antibacterial characteristics, safety to the human body, and the like. In such antibacterial materials, metal ions such as silver ions, divalent copper ions, and zinc ions have a bactericidal effect or an effect of preventing bacteria's growth. The inorganic antibacterial materials are supported and used on porous supports of zeolite, silica, or the like from the viewpoint of improving the antibacterial activity thereof (see Patent Literatures 1 and 2, for example).

### CITATION LIST

### PATENT LITERATURE

Patent Literature 1: Japanese Unexamined Patent Application Publication No. 2002-68914
Patent Literature 2: Japanese Unexamined Patent Application Publication No. H11-236304

### SUMMARY OF INVENTION

However, the antibacterial performance of the conventional antibacterial materials does not continue sufficiently, and the antibacterial materials could discolor after long-term use. Moreover, if the antibacterial material is silver, the material cost is high. Furthermore, to support metal or the like on a porous support can increase the manufacturing cost.

The present invention is made in the light of the aforementioned problems of the conventional art. An object of the present invention is to provide an inexpensive optical semiconductor-dispersed resin composition which retains the antibacterial performance for a long period of time and is prevented from discoloring, and provide a manufacturing method of the resin composition and an antibacterial member.

An optical semiconductor-dispersed resin composition according to a first aspect of the present invention includes: an optical semiconductor; and 0.1 to 5 parts by mass of a copper compound per 100 parts by mass of the optical semiconductor. The resin composition further includes: 50 to 350 parts by mass of an active energy ray-curable resin per 100 parts by mass of the optical semiconductor; and 0.1 to 20 parts by mass of a photopolymerization initiator per 100 parts by mass of the active energy ray-curable resin. The resin composition is manufactured by performing polymerization of the active energy ray-curable resin and excitation of the optical semiconductor through exposure to active energy rays.

An optical semiconductor-dispersed resin composition according to a second aspect of the present invention is the resin composition according to the first aspect in which the optical semiconductor has a particle size less than the wavelength of visible light.

A method of manufacturing an optical semiconductor-dispersed resin composition according to a third embodiment of the present invention includes a step of: mixing an optical semiconductor, a copper compound, an active energy ray-curable resin, a photopolymerization initiator, and a liquid dispersion medium to prepare a resin composition precursor solution. The method further includes a step of exposing the resin composition precursor solution to active energy rays for polymerization of the active energy ray-curable resin and excitation of the optical semiconductor. The content of the copper compound is 0.1 to 5 parts by mass per 100 parts by mass of the optical semiconductor; the content of active energy ray-curable resin is 50 to 350 parts by mass per 100 parts by mass of the optical semiconductor; and the content of photopolymerization initiator is 0.1 to 20 parts by mass per 100 parts by mass of the active energy ray-curable resin.

A method of manufacturing an optical semiconductor-dispersed resin composition according to a fourth aspect of the present invention is the method according to the third aspect in which the copper compound is a divalent compound.

A method of manufacturing an optical semiconductor-dispersed resin composition according to a fifth aspect of the present invention is the method according to the third or fourth aspect in which the optical semiconductor has a particle size of 10 nm to 200 nm within the resin composition precursor solution.

An antibacterial member according to a sixth aspect of the present invention includes: a base material; and a film containing the optical semiconductor-dispersed resin composition according to the first or second aspect.

An antibacterial member according to a seventh aspect of the present invention is the antibacterial member according to the sixth aspect in which the antibacterial member has an antibacterial activity value of not less than 3 per hour.

### DESCRIPTION OF EMBODIMENTS

Hereinafter, a description is given of an optical semiconductor-dispersed resin composition, manufacturing method thereof, and an antibacterial member according to an embodiment of the present invention.

### [Optical semiconductor-dispersed resin composition]

An optical semiconductor-dispersed resin composition (hereinafter, also referred to as a resin composition) according to an embodiment of the present invention includes an optical semiconductor and a copper compound. The resin composition according to the embodiment further includes an active energy ray-curable resin as a matrix and a photopolymerization initiator to disperse the optical semiconductor and copper compound.

The optical semiconductor gives a photocatalytic function to the resin composition. To be specific, upon being exposed to active energy rays such as ultraviolet rays, the optical semiconductor generates an active species such as active oxygen. The generated active oxygen comes into contact with organic substances to oxidize and decompose the organic substances. The optical semiconductor is thus capable of decomposing and removing organic substances that adhere to the resin composition to cause contamination and odor, giving effects of antifouling and deodorization.

The optical semiconductor further has an effect of stabilizing monovalent copper compounds, which has high antibacterial activity, through the active species generated by exposure to active energy rays. In the resin composition of the embodiment, the optical semiconductor and copper compound are dispersed in the active energy ray-curable resin. The active species generated from the optical semiconductor comes into contact with the copper compound existing around the same to reduce copper atoms of the copper compound to monovalent copper, which has high antibacterial activity. Accordingly, the resin composition of the embodiment including the monovalent copper can exert high antibacterial activity.

The resin composition of the embodiment is produced by performing polymerization of the active energy ray-curable resin and excitation of the optical semiconductor through exposure to active energy rays. In this embodiment, polymerization of the active energy ray-curable resin, excitation of the optical semiconductor, and reduction of the copper compound are thus performed by a single step, so that the manufacturing cost can be reduced. Moreover, within the resin composition, the reduced copper compound is less likely to be oxidized and can remain monovalent for a long period of time, for example.

Examples of the optical semiconductor that generates active species by exposure to active energy rays can be titanium oxide, iron oxide, zinc oxide, tin oxide, zirconium oxide, tungsten oxide, molybdenum oxide, and ruthenium oxide. The optical semiconductor can be also germanium oxide, lead oxide, gadolinium oxide, copper oxide, vanadium oxide, niobium oxide, tantalum oxide, manganese oxide, cobalt oxide, rhodium oxide, rhenium oxide, or the like. The optical semiconductor can be composed of one of the aforementioned substances or a combination of two or more thereof. Among the aforementioned optical semiconductors, titanium oxide is especially preferable because anatase crystalline titanium oxide has high photocatalytic function and is accessible.

The copper compound is preferably a divalent copper compound, which is more excellent in stability, more inexpensive, and more abundantly available than monovalent copper compounds. As described above, in the resin composition of the embodiment, the active species generated from the optical semiconductor comes into contact with copper atoms in the copper compound to reduce the copper atoms. Accordingly, even if the divalent copper compound, which is excellent in stability and inexpensive, is used, divalent copper atoms can be reduced to monovalent copper atoms within the resin composition, thus exerting the antibacterial activity. Moreover, as described later, by using a divalent copper compound, resin composition precursor solution can be easily prepared at room temperature in the atmosphere and can be applied by a publicly known method. The manufacturing cost can be therefore reduced.

The above-described copper compound is preferably at least one selected from the group consisting of copper sulfate (II), copper chloride (II), copper nitrate (II), copper acetate (II), copper phosphate, and copper halide (CuF₂, CuBr₂, and CuI₂).

In the resin composition of the embodiment, the content of the copper compound is 0.1 to 5 parts by mass per 100 parts by mass of the optical semiconductor and preferably, 1 to 3 parts by mass. When the content of the copper compound is less than 0.1 parts by mass, the antibacterial activity is inadequate, and the antibacterial performance can be lowered. When the content of the copper compound is more than 5 parts by mass, the transparency is lowered, degrading the appearance of the resin composition.

In the resin composition, the average secondary particle size of the optical semiconductor is preferably not more than 50 µm and is more preferably not more than 5 µm. When the average secondary particle size of the optical semiconductor is in the aforementioned range, the optical semiconductor can efficiently generate the aforementioned active species and reduce copper atoms. To give transparency to the resin composition, the average secondary particle size of the optical semiconductor is preferably less than the wavelength of visible light, that is, less than 380 nm. When having an average secondary particle size of not more than 200 nm, the optical semiconductor can give high transparency to the resin composition, which is particularly preferred. The lower limit of the average secondary particle size of the optical semiconductor is not particularly limited but can be set to 10 nm, for example. The average secondary particle size of the optical semiconductor in the resin composition can be measured by using a scanning electron microscope (SEM) or a transmission electron microscope (TEM), for example.

When the optical semiconductor is titanium oxide having an anatase-crystalline structure, the average secondary particle size thereof is preferably not more than 5 µm, more preferably not more than 100 nm, and particularly preferably not more than 20 nm. When the particle size of the optical semiconductor is set in the aforementioned range, the obtained resin composition has a high photocatalytic function and has transparency.

In the resin composition, similarly to the optical semiconductor, the average secondary particle size of the copper compound is preferably not more than 50 µm and more preferably not more than 5 µm. When the average secondary particle size of the copper compound is in the aforementioned range, the copper compound is efficiently reduced by the aforementioned active species to exert high antibacterial activity. To give transparency to the resin composition, the average secondary particle size of the copper compound is preferably less than the wavelength of visible light, that is, less than 380 nm. The copper compound can give high transparency to the resin composition when having an average secondary particle size of not more than 200 nm, which is particularly preferable. The lower limit of the average secondary particle size of the copper compound is also not particularly limited but can be set to 10 nm, for example.

The optical semiconductor and copper compound are dispersed and held in the active energy ray-curable resin, which is a matrix of the resin composition. The active energy ray-curable resin can be any substance that is polymerizable by active energy rays. The active energy ray-curable resin can be multifunctional (meth)acrylate or the like. To be specific, examples thereof can be pentaerythritols including pentaerythritol tri(meth)acrylate, dipentaerythritol penta(meth)acrylate, and dipentaerythritol tetra(meth)acrylate. Moreover, examples thereof can be dipentaerythritol tri(meth)acrylate and dipentaerythritol di(meth)acrylate. Still moreover, examples thereof can be methylols including trimethylolpropane di(meth)acrylate and epoxy acrylates including bisphenol A diepoxy acrylate. Among the aforementioned substances, pentaerythritol tri(meth)acrylate and dipentaerythritol penta(meth)acrylate are particularly preferred as the active energy ray-curable resin.

In the resin composition of the embodiment, the content of the active energy ray-curable resin is 50 to 350 parts by mass per 100 parts by mass of the optical semiconductor. When the content of the active energy ray-curable resin is less than 50 parts by mass, the hardness of the resin composition is insufficient. The optical semiconductor and copper compound therefore cannot be held for a long period of time, and the resin composition could deform. Moreover, when the content of the active energy ray-curable resin is more than 350 parts by mass, the contents of the optical semiconductor and copper compound are reduced relatively, and the antibacterial activity of the resin composition could be inadequate.

From the viewpoint of further improving the hardness and antibacterial activity of the obtained resin composition, it is more preferable that the content of the active energy ray-curable resin is 80 to 340 parts by mass per 100 parts by mass of the optical semiconductor.

The resin composition of the embodiment contains the photopolymerization initiator for polymerizing the active energy ray-curable resin. The photopolymerization initiator can be a benzoin compound with a carbon number of 8 to 18. Examples thereof are benzoin, benzoin methyl ether, benzoin ethyl ether, benzoin propyl ether, and benzoin isobutyl ether.

The photopolymerization initiator can be an acetophenone compound with a carbon number of 8 to 18. Examples thereof are acetophenone, 2,2-diethoxy-2-phenylacetophenone, 2,2-diethoxy-2-phenylacetophenone, and 1,1-dichloroacetophenone. Moreover, examples thereof are 2-hydroxy-2-methyl-phenylpropane-1-one, diethoxyacetophenone, 1-hydroxycyclohexyl phenyl ketone, and 2-methyl-1-[4-(methylthio)phenyl]-2-morpholinopropane-1-one.

The photopolymerization initiator can be also an anthraquinone compound with a carbon number of 14 to 19. Examples thereof are 2-ethylanthraquinone, 2-t-butylanthraquinone, and 2-chloroanthraquinone, and 2-amylanthraquinone. Moreover, the photopolymerization initiator can be a thioxanthone compound with a carbon number of 13 to 17, and examples thereof can be 2,4-diethylthioxanthone, 2-isopropylthioxanthone, and 2-chlorothioxanthone. Furthermore, the photopolymerization initiator can be a ketal compound with a carbon number of 16 to 17, and examples thereof can be acetophenonedimethylketal and benzyldimethylketal. Still furthermore, the photopolymerization initiator can be a benzophenone compound with a carbon number of 13 to 21, and examples thereof are benzophenone, 4-benzoil-4'-methyldiphenylsulfide and 4,4'-bismethylaminobenzophenone.

The photopolymerization initiator can be also a phosphine oxide compound with a carbon number of 22 to 28. Examples of the phosphine oxide compound are 2,4,6-trimethylbenzoyldiphenylphosphine oxide, and bis(2,6-dimethoxybenzoyl)-2,4,4-trimethylpentylphosphine oxide and also are bis(2,4,6-trimethylbenzoyl)-phenylphosphine oxide. The photopolymerization initiator may be composed of one of the aforementioned substances or a combination of two or more thereof.

Among the aforementioned substances as the photopolymerization initiator, acetophenone compounds and phosphine oxide compounds are preferable for less yellowing after exposure to active energy rays. More preferable substances are 1-hydroxycyclohexyl phenyl ketone and 2-methyl-1-[4-(methylthio)phenyl]-2-morpholinopropane-1-one and moreover 2,4,6-trimethylbenzoyldiphenylphosphine oxide, and bis(2,6-dimethoxybenzoyl)-2,4,4-trimethylpentylphosphine oxide. Among the aforementioned substances as the photopolymerization initiator, 1-hydroxycyclohexyl phenyl ketone is particularly preferable.

The content of the photopolymerization initiator is 0.1 to 20 parts by mass per 100 parts by mass of the active energy ray-curable resin from the viewpoint of the curability and light resistance of the active energy ray-curable resin. When the content of the photopolymerization initiator is less than 0.1 parts by mass, the film formability, hardness, and solvent resistance of the resin composition are inadequate. The optical semiconductor and copper compound cannot be held for a long period of time, and the resin composition could deform. When the content of the photopolymerization initiator is more than 20 parts by mass, the obtained resin composition could be yellowed and be degraded in appearance. The content of the photopolymerization initiator is preferably 3 to 15 parts by mass per 100 parts by mass of the active energy ray-curable resin and most preferably 7 to 11 parts by mass.

The resin composition of the embodiment can optionally contain additives typically added to paint, ink, and the like such as antioxidants and ultraviolet absorbents if necessary. The content of the additives is preferably not more than 5 % by mass of the resin composition and more preferably not more than 2 % by mass.

The antioxidants can be hindered phenols and amines. The hindered phenols include triethyleneglycol-bis[3-(3-t-butyl-5-methyl-4-hydroxyphenyl)propionate] and further include 1,6-hexadiol-bis[3-(3,5-di-t-butyl-4-hydroxyphenyl)propionate]. Furthermore, the hindered phenols include octadecyl-3-(3,5-di-t-butyl-4-hydroxyphenyl)propionate, 3,5-di-t-butyl-4-hydroxybenzylphosphonate-diethylester, and the like. The amines include n-butylamine, triethylamine, diethylaminomethylmethacrylate, and the like.

The ultraviolet absorbent can be benzotriazoles, triazines, benzophenones, and oxanilides. The benzotriazoles include 2-(5-methyl-2-hydroxyphenyl)benzotriazole and 2-(3,5-di-t-butyl-2-hydroxyphenyl)benzotriazole. The benzotriazoles also include 2-(3,5-di-t-butyl-2-hydroxyphenyl)-5-chlorobenzotriazole, 2-(3,5-di-t-amyl-2-hydroxyphenyl)benzotriazole, and the like. The triazines include 2-(4,6-diphenyl-1,3,5-triazine-2-yl)-5-[(hexyl)oxy]-phenol and the like. The benzophenones include 2-hydroxy-4-n-octyloxybenzophenone and the like. The oxanilides include 2-ethoxy-2'-ethyloxalic acid bisanilide and the like.

The resin composition according to the embodiment includes the optical semiconductor and 0.1 to 5 parts by mass of the copper compound per 100 parts by mass of the optical semiconductor. The resin composition further includes 50 to 350 parts by mass of the active energy ray-curable resin per 100 parts by mass of the optical semiconductor and 0.1 to 20 parts by mass of the photopolymerization initiator per 100 parts by mass of the active energy ray-curable resin. The resin composition is manufactured by polymerization of the active energy ray-curable resin and excitation of the optical semiconductor which are carried out by exposure to the active energy rays. Accordingly, the resin composition can denature or break the structure of microorganisms such as fungus and inactivate the microorganisms within a short period of time. Moreover, the resin composition can retain the antibacterial activity for a long period of time and can be manufactured at low cost.

### [Manufacturing Method of Optical semiconductor-dispersed resin composition]

The method of manufacturing the optical semiconductor-dispersed resin composition of the embodiment includes: a step of mixing the aforementioned optical semiconductor, copper compound, active energy ray-curable resin, and photopolymerization initiator into a liquid dispersion medium to prepare a resin composition precursor solution; and a step of exposing the resin composition precursor solution to active energy rays.

The resin composition precursor solution is obtained by mixing the aforementioned optical semiconductor, copper compound, active energy ray-curable resin, and photopolymerization initiator into a liquid dispersion medium described later. Preferably, these materials are mixed using a disperser, a homogenizer, a bead mill, a sand grinder, a ball mill, a colloid mill, or the like. By particularly using the bead mill, the aforementioned materials are highly dispersed in the liquid dispersion medium.

The mixing ratio of the optical semiconductor, copper compound, active energy ray-curable resin, and photopolymerization initiator is as described above. To be specific, the content of the copper compound is 0.1 to 5 parts by mass per 100 parts by mass of the optical semiconductor. The content of the active energy ray-curable resin is 50 to 350 parts by mass per 100 parts by mass of the optical semiconductor. The content of the active energy ray-curable resin is 0.1 to 20 parts by mass per 100 parts by mass of the active energy ray-curable resin.

The liquid dispersion medium can include at least one or more types of hydrophilic organic solvents and hydrophobic organic solvents. The amount of the liquid dispersion medium mixed can be 50 to 1000 parts by mass per 100 parts by mass of the optical semiconductor but may be properly adjusted based on the viscosity of the obtained resin composition precursor solution or the like.

The hydrophilic organic solvents are organic solvents which are capable of dissolving arbitrary proportions of water and can be alcohols, ketones, and nitriles. To be specific, the hydrophilic organic solvents can be: primary alcohols including methanol, ethanol, and propanol; secondary alcohols including 2-propanol and 2-butanol; and tertiary alcohols including 1,1,1-trimethylmethanol. Moreover, the hydrophilic organic solvents also can be: polyalcohols including ethylene glycol, propylene glycol; dialkyl ketones including acetone; and nitriles including acetonitrile, propionitrile, and pivalonitrile. Among the aforementioned organic solvents, the hydrophilic organic solvent is preferably an alcohol or ketone-based organic solvent and is particularly preferably methanol, ethanol, propanol, 2-propanol, or acetone.

The hydrophobic organic solvents are organic solvents which are not capable of dissolving arbitrary proportions of water and can be hydrocarbons, ketones, esters, and ethers. To be specific, the hydrophobic organic solvents can be: hydrocarbons including benzene, toluene, xylene, mesitylene, pentane, hexane, octane; and ketones including methylethylketone, diethyl ketone, and methyl isobutyl ketone. Moreover, the hydrophobic organic solvents also can be: esters including methyl acetate, ethyl acetate, propyl acetate, isobutyl acetate, methyl acrylate, ethyl acrylate, methyl methacrylate, and ethyl methacrylate. Furthermore, the hydrophobic organic solvents also can be ethers including dimethyl ether, diethyl ether, methyl ethyl ether, and tert-butyl methyl ether.

Within the resin composition precursor solution, the average secondary particle size of the optical semiconductor is preferably not more than 50 µm and more preferably not more than 5 µm. When the secondary particle size of the optical semiconductor within the solution is in the aforementioned range, the obtained resin composition thin film can be made transparent. To give high transparency to the resin composition, it is preferable that the average secondary particle size of the optical semiconductor is not more than 200 nm. The lower limit of the average secondary particle size of the optical semiconductor is not particularly limited but can be set to 10 nm, for example.

In the resin composition precursor solution, similarly to the optical semiconductor, the average secondary particle size of the copper compound is preferably not more than 50 µm and more preferably not more than 5 µm. To give high transparency to the resin composition, it is preferable that the average secondary particle size of the copper compound is not more than 200 nm. The lower limit of the average secondary particle size of the copper compound is not particularly limited but can be set to 10 nm, for example. The average secondary particle sizes of the optical semiconductor and copper compound in the resin composition precursor solution can be obtained by applying a laser diffraction particle size analyzer to the solution. In this case, the average secondary particle size is a median diameter (D50).

The resin composition precursor solution of the embodiment may optionally contain additives such as a dispersant for inorganic or organic particles, a defoamer, a silane coupling agent, a thixotropic agent (thickener), an antioxidant, and an ultraviolet absorbent. The content of the aforementioned additives is preferably not more than 5 % by mass of the total mass of the resin composition and more preferably not more than 2 % by mass.

As the dispersant, organic and inorganic dispersants can be used. The organic dispersants include high-molecular dispersants with number average molecular weights (Mn) of 2000 to 500000 and low-molecular dispersants with number average molecular weights of less than 2000.

As the thixotropic agent, inorganic thixotropic agents, organic thixotropic agents, and the like can be used. The inorganic thixotropic agents include bentonite, organic bentonite, and ultrafine surface-treated calcium carbonate. The organic thixotropic agents include hydrogenated castor oil wax, calcium stearate, aluminum oleate, and polymerized flaxseed oil. The antioxidant and ultraviolet absorbent can be selected from the materials described above.

Next, the resin composition precursor solution obtained as described above is exposed to the active energy rays. The aforementioned photopolymerization initiator is therefore cleaved into radicals, thus causing radical reaction with the active energy ray-curable resin, and the active energy ray-curable resin is therefore polymerized to be cured.

In the embodiment, by exposing the resin composition precursor solution to the active energy rays, polymerization of the active energy ray-curable resin is performed together with excitation of the optical semiconductor. As described above, exposure to the active energy rays causes polymerization of the active energy ray-curable resin while causing excitation of the optical semiconductor to generate active species. The copper compound located in the vicinity of the optical semiconductor is therefore reduced to exert antibacterial activity. In this embodiment, in other words, the polymerization of the active energy ray-curable resin, excitation of the optical semiconductor, and reduction of the copper compound are performed by a single step, so that the manufacturing cost can be reduced. In the resin composition obtained by the aforementioned manufacturing method, the reduced copper compound is less likely to be oxidized and can remain monovalent, for example, for a long period of time.

The active energy rays that are used to expose the resin composition precursor solution can be ultraviolet rays, electron rays, X-rays, infrared rays, or visible rays. Among these active energy rays, ultraviolet rays and electron rays are suitable from the viewpoint of curability, prevention of resin degradation, easy excitation of the optical semiconductor.

In the case of exposing the resin composition precursor solution to ultraviolet rays, various ultraviolet irradiation apparatuses can be used. The ultraviolet irradiation apparatuses include a xenon lamp, a high-pressure mercury lamp, a metal halide lamp, and the like. The irradiance of ultraviolet rays is preferably 10 to 10000 mJ/cm². The lower limit of the irradiance is preferably 100 mJ/cm² from the viewpoint of curability of the composition, and the upper limit of the irradiance is preferably 5000 mJ/cm² from the viewpoint of flexibility of the cured product.

In the manufacturing method of the embodiment, the liquid dispersion medium may be removed by vaporization before the resin composition precursor solution is exposed to the active energy rays. When the liquid dispersion medium is removed to bring the resin composition precursor into a semisolid state, the resin composition precursor is easily exposed to the active energy rays.

In the case where an antibacterial member including the base material and resin composition is obtained by applying the resin composition precursor solution to the base material for polymerization, the method of applying the solution is not particularly limited. The method of applying the resin composition precursor solution to at least a part of one side of the base material is coating, printing, or the like. The coating can use an air spray, a brush, a bar coater, a Meyer bar, an air knife, or the like. The printing can be gravure printing, reverse gravure printing, off-set printing, flexography, screen printing, or the like.

The thickness of the application film of the resin composition precursor solution after curing is preferably 2 to 15 µm and more preferably 4 to 13 µm. When the cured film has a thickness within the aforementioned range, it is possible to increase the surface hardness of the cured film and reduce the cure shrinkage of the resin composition due to exposure to the active energy rays.

As described above, the method of manufacturing the optical semiconductor-dispersed resin composition according to the embodiment includes a step of mixing the optical semiconductor, copper compound, active energy ray-curable resin, photopolymerization initiator, and liquid dispersion medium to prepare the resin composition precursor solution. The manufacturing method further includes a step of exposing the resin composition precursor solution to the active energy rays for polymerization of the active energy ray-curable resin and excitation of the optical semiconductor. In the resin composition precursor solution in this process, the optical semiconductor is mixed with 0.1 to 5 parts by mass of the copper compound per 100 parts by mass of the optical semiconductor. Moreover, in the resin composition precursor solution, 50 to 350 parts by mass of the active energy ray-curable resin is mixed per 100 parts by mass of the optical semiconductor, and 0.1 to 20 parts by mass of the photopolymerization initiator is mixed per 100 parts by mass of the active energy ray-curable resin. In this embodiment, the method does not separately perform excitation of the optical semiconductor after polymerizing the active energy ray-curable resin. The manufacturing cost can be therefore reduced. In the resin composition obtained by the aforementioned manufacturing method, the optical semiconductor is capable of decomposing and removing organic substances that can cause contamination and odor while the reduced copper compound can retain the antibacterial activity for a long period of time.

### [Antibacterial member]

An antibacterial member according to the embodiment includes: a base material; and a coating film which is provided on the base material and contains the above-described optical semiconductor-dispersed resin composition. As described above, the optical semiconductor-dispersed resin composition of the embodiment has effects of antifouling and deodorization as well as high antibacterial activity. In the film formation step of the process of manufacturing the antibacterial member provided with the resin composition, excitation of the optical semiconductor is performed by exposure to the active energy rays. Accordingly, the antibacterial member has high antibacterial, antifouling, and deodorization effects and therefore can be suitably applied to various types of interior materials provided in not only bright places but also dark places.

In this embodiment, the base material can be basically made of any materials including ceramic, metal, glass, plastic, a coated plywood board, and a composition thereof. The shape of the base material is not particularly limited and can be either a complicated shape or a simple shape, such as a plate, spherical, columnar, cylindrical, stick, prism, or hollow prism shape.

### EXAMPLES

Hereinafter, the present invention is described in more detail using examples and comparative examples but is not limited by the examples.

### [Example 1]

First, as the optical semiconductor, titanium oxide photocatalyst ST-01 made by ISHIHARA SANGYO KAISHA, LTD. is prepared. As the liquid dispersion medium, isopropyl alcohol made by Wako Pure Chemical Industries, Ltd. is prepared. As the copper compound, copper sulfate (II) (CuSO₄) made by Wako Pure Chemical Industries, Ltd. is prepared. As the active energy ray-curable resin, UV curable resin for coating V-6841 (active ingredient: 60%) made by DIC CORPORATION is prepared. As the photopolymerization initiator, Irgacure (registered trademark) 184 (1-hydroxy-cyclohexyl-phenylketone) made by BASF Japan Ltd. is prepared. As the dispersant, BYK (registered trademark)-9077 made by BYK is prepared.

500 parts by mass of isopropyl alcohol, 1 parts by mass of copper sulfate (II), 167 parts by mass of the UV curable resin, 1 parts by mass of the photopolymerization initiator, 5 parts by mass of the dispersant are mixed with 100 parts by mass of the titanium oxide, and the mixture is stirred sufficiently. After being stirred, the mixture is subjected to dispersion treatment by using Multi-lab made by Shinmaru Enterprises Corporation and using 0.1 mm alumina beads as the dispersion medium. The dispersion treatment is performed until the average particle sizes (D50) of the titanium oxide and copper sulfate (II) reach 200 nm or less, thus preparing the resin composition precursor solution of Example 1. The final average particle size of the solution is 150 nm. The average particle size of the solution is measured using a dynamic light scattering photometer DLS-8000 made by OTSUKA ELECTRONICS Co., LTD.

Next, the obtained resin composition precursor solution is applied to easily adhesive polyester film (A4300 by TOYOBO CO., LTD) up to a dry film thickness of 5 µm using a bar coater. The film with the resin composition precursor solution adhering thereto is dried at 100°C for 5 minutes.

The film subjected to the dry treatment is exposed to ultraviolet rays (irradiance: 400 mJ/cm²) under the conditions of an irradiation intensity of 200 mW/cm² and a conveyance speed of 15 m/min using an ultraviolet irradiation apparatus (by Fusion UV systems, Inc.). In this manner, the resin composition precursor is cured at the same time as the optical semiconductor is excited, thus preparing the resin composition of Example 1.

The prepared resin composition is left at room temperature (25°C) for one week to confirm the stability of the copper compound and cure the thin film and is then subjected to evaluation tests described below.

### [Example 2]

The resin composition precursor solution of Example 2 is prepared in the same manner as Example 1 except that: the amount of copper sulfate (II) mixed is changed to 5 parts by mass; the amount of the photopolymerization initiator mixed is changed to 2 parts by mass; and the final average particle size of the resin composition precursor solution is set to 140 nm.

### [Example 3]

The resin composition precursor solution of Example 3 is prepared in the same manner as Example 1 except that: the amount of copper sulfate (II) mixed is changed to 0.1 parts by mass; and the final average particle size of the resin composition precursor solution is set to 140 nm.

### [Example 4]

The resin composition precursor solution of Example 4 is prepared in the same manner as Example 1 except that: the amount of the UV curable resin mixed is changed to 83 parts by mass; the amount of the photopolymerization initiator mixed is changed to 0.5 parts by mass; and the final average particle size of the resin composition precursor solution is set to 140 nm.

### [Example 5]

The resin composition precursor solution of Example 5 is prepared in the same manner as Example 1 except that: the amount of the UV curable resin mixed is changed to 333 parts by mass; the amount of the photopolymerization initiator mixed is changed to 2 parts by mass; and the final average particle size of the resin composition precursor solution is set to 170 nm.

### [Example 6]

The resin composition precursor solution of Example 6 is prepared in the same manner as Example 1 except that the amount of the photopolymerization initiator mixed is changed to 20 parts by mass.

### [Example 7]

The resin composition precursor solution of Example 7 is prepared in the same manner as Example 1 except that: the amount of the photopolymerization initiator mixed is changed to 0.1 parts by mass.

### [Example 8]

The resin composition precursor solution of Example 8 is prepared in the same manner as Example 1 except that copper sulfate (II) is replaced with copper acetate (II) (Cu(OCOCH₃)₂).

### [Example 9]

The resin composition precursor solution of Example 9 is prepared in the same manner as Example 1 except that copper sulfate (II) is replaced with copper acetate (II); and the final average particle size of the resin composition precursor solution is set to 190 nm.

### [Example 10]

The resin composition precursor solution of Example 10 is prepared in the same manner as Example 1 except that: copper sulfate (II) is replaced with copper carbonate (II) (Cu(CO₃)); and the amount of the UV curable resin is changed to 172 parts by mass.

### [Example 11]

The resin composition precursor solution of Example 11 is prepared in the same manner as Example 1 except that: copper sulfate (II) is replaced with copper acetate (II); and the amount of the UV curable resin mixed is changed to 170 parts by mass.

### [Comparative Example 1]

The resin composition precursor solution of Comparative Example 1 is prepared in the same manner as Example 1 except that copper sulfate (II) is replaced with nickel acetate (II) (Ni(OCOCH₃)₂).

### [Comparative Example 2]

The resin composition precursor solution of Comparative Example 2 is prepared in the same manner as Example 1 except that: the amount of copper sulfate (II) mixed is changed to 10 parts by mass; and the final average particle size of the resin composition precursor solution is set to 140 nm.

### [Comparative Example 3]

The resin composition precursor solution of Comparative Example 3 is prepared in the same manner as Example 1 except that: the amount of copper sulfate (II) mixed is changed to 0.05 parts by mass; and the final average particle size of the resin composition precursor solution is set to 140 nm.

### [Comparative Example 4]

The resin composition precursor solution of Comparative Example 4 is prepared in the same manner as Example 1 except that: the amount of the UV curable resin mixed is changed to 833 parts by mass; the amount of the photopolymerization initiator mixed is changed to 5 parts by mass; and the final average particle size of the resin composition precursor solution is set to 140 nm.

### [Comparative Example 5]

The resin composition precursor solution of Comparative Example 5 is prepared in the same manner as Example 1 except that the amount of the UV curable resin mixed is changed to 17 parts by mass; the amount of the photopolymerization initiator mixed is changed to 0.1 parts by mass; and the final average particle size of the resin composition precursor solution is set to 170 nm.

### [Comparative Example 6]

The resin composition precursor solution of Comparative Example 6 is prepared in the same manner as Example 1 except that: the amount of the photopolymerization initiator is changed to 50 parts by mass.

### [Comparative Example 7]

The resin composition precursor solution of Comparative Example 7 is prepared in the same manner as Example 1 except that: the amount of the photopolymerization initiator mixed is changed to 0.05 parts by mass.

### [Comparative Example 8]

The resin composition precursor solution of Comparative Example 8 is prepared in the same manner as Example 1 except that: the final average particle size of the resin composition precursor solution is set to 190 nm; and the ultraviolet exposure process is not performed. In other words, in Comparative Example 8, the film with the resin composition precursor solution adhering thereto is dried at 100°C for 5 minutes and is subjected to the evaluation tests described below.

Table 1 shows the content of titanium oxide, the type and content of the copper compound, the content of the active energy ray-curable resin, the content of the photopolymerization initiator, the final average particle size, and exposure to ultraviolet rays in each example and comparative example described above.

**[Table 1]**

| | Titanium Oxide (parts by mass) | Copper Compound | | Active Energy Ray-curable Resin (parts by mass) | Photopolymer ization Initiator (parts by mass) | Average Particle Size (nm) | UV Exposure | Set-to-Touch | Film Formability | Appearance | Hardness | Solvent Resistance | Anibacterial Activity Value/hour |
|---|---|---|---|---|---|---|---|---|---|---|---|---|---|
| | | Composition | Content (parts by mass) | | | | | | | | | | |
| Example 1 | 100 | CuSO₄ | 1 | 167 | 1 | 150 | Exposed | A | A | A | 2H | A | 6 |
| Example 2 | 100 | CuSO₄ | 5 | 167 | 2 | 140 | Exposed | A | A | A | 2H | A | 7 |
| Example 3 | 100 | CuSO₄ | 0.1 | 167 | 1 | 140 | Exposed | A | A | A | 2H | A | 5 |
| Example 4 | 100 | CuSO₄ | 1 | 83 | 0.5 | 140 | Exposed | A | A | A | 2H | A | 5 |
| Example 5 | 100 | CuSO₄ | 1 | 333 | 2 | 170 | Exposed | A | A | A | H | A | 7 |
| Example 6 | 100 | CuSO₄ | 1 | 167 | 20 | 150 | Exposed | A | A | A | 2H | A | 6 |
| Example 7 | 100 | CuSO₄ | 1 | 167 | 0.1 | 150 | Exposed | A | A | A | 2H | A | 6 |
| Example 8 | 100 | Cu(OCOCH₃)₂ | 1 | 167 | 1 | 150 | Exposed | A | A | A | 2H | A | 6 |
| Example 9 | 100 | Cu(OCOCH₃)₂ | 1 | 167 | 1 | 190 | Exposed | A | A | A | 2H | A | 6 |
| Example 10 | 100 | CuCO₃ | 1 | 172 | 1 | 150 | Exposed | A | A | A | 2H | A | 4 |
| Example 11 | 100 | Cu(OCOCH₃)₂ | 1 | 170 | 1 | 150 | Exposed | A | A | A | 2H | A | 7.5 |
| Comparative Example 1 | 100 | Ni(OCOCH₃)₂ | 1 | 167 | 1 | 150 | Exposed | A | A | A | 2H | A | 2 |
| Comparative Example 2 | 100 | CuSO₄ | 10 | 167 | 1 | 140 | Exposed | A | A | B | 2H | A | 7 |
| Comparative Example 3 | 100 | CuSO₄ | 0.05 | 167 | 1 | 140 | Exposed | A | A | A | 2H | A | 2 |
| Comparative Example 4 | 100 | CuSO₄ | 1 | 833 | 5 | 140 | Exposed | A | A | A | 2H | A | 2 |
| Comparative Example 5 | 100 | CuSO₄ | 1 | 17 | 0.1 | 170 | Exposed | A | C | A | 2B | A | 6 |
| Comparative Example 6 | 100 | CuSO₄ | 1 | 167 | 50 | 150 | Exposed | A | A | B (Yellowed) | 2H | A | 6 |
| Comparative Example 7 | 100 | CuSO₄ | 1 | 167 | 0.05 | 150 | Exposed | A | C | A | B | B | 6 |
| Comparative Example 8 | 100 | CuSO₄ | 1 | 167 | 1 | 190 | Not-exposed | A | C | A | B | A | 3 |

The resin compositions obtained in Examples 1 to 11 and Comparative Examples 1 to 8 described above are subjected to the following evaluation tests. The results of the evaluation tests are shown in Table 1 together.

### [Film Formability]

The resin composition thin film of each example and comparative example is visually observed. Resin composition thin films with no crack and no peel-off observed thereon are evaluated as "A". Resin composition thin films with crack and peel-off observed on a part of the same are evaluated as "B". Resin composition thin films with crack and peel-off observed all over are evaluated as "C".

### [Set-to-Touch]

The set-to-touch of each example and comparative example is observed in accordance with JIS K5600-1-1 (Testing methods for paints - Part 1: General rule - Section 1: General test methods (conditions and methods)). Resin composition thin films with no finger marks left on the surfaces thereof are evaluated as "A". Resin composition thin films with finger marks left on the surfaces thereof are evaluated as "B".

### [Appearance]

The haze of the resin composition thin film of each example and comparative example is measured using a haze meter (NDH2000) made by NIPPON DENSHOKU INDUSTRIES, Co., LTD. Thin films having haze values of not more than 5 are evaluated as "A". Thin films having haze values of more than 5 are evaluated as "B".

### [Hardness]

The scratch resistance of each thin film is determined in accordance with the pencil method prescribed by JIS K5600-5-4 (Testing methods for paints - Part 5: Mechanical property of film - Section 4: Scratch hardness (Pencil method)).

### [Solvent resistance]

Waste cloth impregnated with isopropyl alcohol is pressed against the surface of each resin composition thin film and slid back and forth 10 times along the resin composition thin film. Subsequently, the appearance of the surface of the resin composition thin film is visually observed. Thin films with no trouble observed thereon are evaluated as "A". Thin films with whitening or peel-off observed thereon are evaluated as "B".

### [Antibacterial activity]

The antibacterial activity value of the resin composition thin film of each example and comparative example is measured in accordance with JIS Z2801 (Antibacterial products - Test for antibacterial activity and efficacy). In JIS Z2801, the numbers of viable bacteria of antibacterial and non-antibacterial test pieces are counted after 24 hours. In this evaluation test, the number of viable bacteria is counted every one hour, and the rate of change in antibacterial activity per one hour is calculated as an antibacterial activity value/hour.

Based on Table 1, Examples 1 to 11 included in the present invention produce good results in the aforementioned evaluation tests. The resin composition thin films of the examples are subjected to measurement of antibacterial activity values after being left for one week in particular. The resin composition thin films of the examples also have antibacterial activity values of not less than 3 per hour, exerting high antibacterial activity.

On the other hand, Comparative Examples 1 to 8, which are out of the scope of the present invention, produce inadequate results in at least one of the aforementioned evaluation tests. As shown in Comparative Example 8 in particular, when excitation of the optical semiconductor is not performed simultaneously with the polymerization of the active energy ray-curable resin, the hardness of the thin film is insufficient. Even when the antibacterial activity value of Comparative Example 8 is measured immediately after being produced, the result thereof is lower than those of the examples. This is because the optical semiconductor is not excited, the copper compound is therefore not reduced, and the antibacterial activity cannot be sufficiently obtained.

The entire contents of Japanese Patent Application No. 2012-255848 (filed on: December 22, 2012) are incorporated herein by reference.

Hereinabove, the contents of the present invention are described with the examples. However, it is obvious to those skilled in the art that the present invention is not limited to the description and can be variously modified and improved.

### INDUSTRIAL APPLICABILITY

The optical semiconductor-dispersed resin composition of the present invention includes predetermined amounts of optical semiconductor, copper compound, active energy ray-curable resin, and photopolymerization initiator. Moreover, the optical semiconductor-dispersed resin composition is produced by performing polymerization of the active energy ray-curable resin and excitation of the optical semiconductor. Accordingly, the resin composition retains high antibacterial activity for a long period of time and is prevented from discoloring. Moreover, the resin composition can be manufactured at low cost. According to the method of manufacturing the resin composition of the present invention, the resin composition can be manufactured by a simple method.

## Claims

1. An optical semiconductor-dispersed resin composition, comprising:
an optical semiconductor;
0.1 to 5 parts by mass of a copper compound per 100 parts by mass of the optical semiconductor;
50 to 350 parts by mass of an active energy ray-curable resin per 100 parts by mass of the optical semiconductor; and
0.1 to 20 parts by mass of a photopolymerization initiator per 100 parts by mass of the active energy ray-curable resin,
wherein the optical semiconductor-dispersed resin composition is manufactured by performing polymerization of the active energy ray-curable resin and excitation of the optical semiconductor through exposure to active energy rays.

2. The optical semiconductor-dispersed resin composition according to claim 1, wherein the optical semiconductor has a particle size less than the wavelength of visible light.

3. A method of manufacturing an optical semiconductor-dispersed resin composition, the method comprising:
mixing an optical semiconductor, 0.1 to 5 parts by mass of a copper compound per 100 parts by mass of the optical semiconductor, 50 to 350 parts by mass of an active energy ray-curable resin per 100 parts by mass of the optical semiconductor, 0.1 to 20 parts by mass of a photopolymerization initiator per 100 parts by mass of the active energy ray-curable resin, and a liquid dispersion medium to prepare a resin composition precursor solution; and
exposing the resin composition precursor solution to active energy rays for polymerization of the active energy ray-curable resin and excitation of the optical semiconductor.

4. The method of manufacturing an optical semiconductor-dispersed resin composition according to claim 3, wherein the copper compound is a divalent compound.

5. The method of manufacturing an optical semiconductor-dispersed resin composition according to claim 3 or 4, wherein the optical semiconductor has a particle size of 10 nm to 200 nm within the resin composition precursor solution.

6. An antibacterial member comprising:
a base material; and
a film containing the optical semiconductor-dispersed resin composition according to claim 1 or 2.

7. The antibacterial member according to claim 6, wherein the antibacterial member has an antibacterial activity value of not less than 3 per one hour.
